(19) Europäisches Patentamt
European Patent Office
Office européen des brevets

(11) **EP 3 868 569 B1**

(12) **EUROPEAN PATENT SPECIFICATION**

(45) Date of publication and mention
of the grant of the patent:
**14.12.2022 Bulletin 2022/50**

(21) Application number: **21156077.6**

(22) Date of filing: **09.02.2021**

(51) International Patent Classification (IPC):
**B60C 1/00** *(2006.01)*        **B60C 3/04** *(2006.01)*
**C08K 3/36** *(2006.01)*

(52) Cooperative Patent Classification (CPC):
(C-Sets available)
**B60C 1/0016; B60C 3/04;** B60C 2011/0025;
C08K 2201/006                                    (Cont.)

(54) **TIRE**

REIFEN

PNEUMATIQUE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **21.02.2020 JP 2020028214**

(43) Date of publication of application:
**25.08.2021 Bulletin 2021/34**

(73) Proprietor: **Sumitomo Rubber Industries, Ltd.
Kobe-shi, Hyogo-ken 651-0072 (JP)**

(72) Inventors:
• **MORI, Kenji
Kobe-shi, Hyogo 651-0072 (JP)**
• **NAKAJIMA, Hiroki
Kobe-shi, Hyogo 651-0072 (JP)**

(74) Representative: **Manitz Finsterwald
Patent- und Rechtsanwaltspartnerschaft mbB
Martin-Greif-Strasse 1
80336 München (DE)**

(56) References cited:
**EP-A1- 3 000 616        EP-A1- 3 406 664
CN-A- 104 130 465        US-A1- 2004 266 968**

US-A1- 2017 197 465

(52) Cooperative Patent Classification (CPC): (Cont.)

C-Sets
**C08L 7/00, C08L 15/00, C08L 9/00, C08L 91/00,
C08L 91/00, C08L 47/00, C08L 9/06, C08L 45/00,
C08L 91/06, C08L 45/00, C08K 3/36, C08K 3/04,
C08K 3/346, C08K 5/103, C08K 5/09, C08K 3/22,
C08K 3/06, C08K 5/31, C08K 5/47, C08K 5/47,
C08K 5/18;
C08L 7/00, C08L 15/00, C08L 91/00, C08L 9/00,
C08L 47/00, C08L 45/00, C08L 91/06, C08L 45/00,
C08K 3/36, C08K 3/04, C08K 5/103, C08K 5/09,
C08K 3/22, C08K 3/06, C08K 5/31, C08K 5/47,
C08K 5/47, C08K 5/18;
C08L 15/00, C08L 7/00, C08L 91/00, C08L 47/00,
C08L 91/06, C08L 45/00, C08K 3/36, C08K 3/36,
C08K 3/04, C08K 5/103, C08K 5/09, C08K 3/22,
C08K 3/06, C08K 5/31, C08K 5/47, C08K 5/47,
C08K 5/18;
C08L 15/00, C08L 91/00, C08L 7/00, C08L 47/00,
C08L 91/00, C08L 91/06, C08L 45/00, C08K 3/36,
C08K 3/36, C08K 3/04, C08K 5/103, C08K 5/09,
C08K 3/22, C08K 3/06, C08K 5/31, C08K 5/47,
C08K 5/47, C08K 5/18;
C08L 15/00, C08L 91/00, C08L 7/00, C08L 91/06,
C08L 45/00, C08K 3/36, C08K 3/04, C08K 5/103,
C08K 5/09, C08K 3/22, C08K 3/06, C08K 5/31,
C08K 5/47, C08K 5/47, C08K 5/18**

**Description**

BACKGROUND OF THE INVENTION

Field of the Invention

The present invention relates to a tire having improved on-ice performance.

Description of the Background Art

International Publication No. WO2012/176476 discloses a tire having improved low fuel consumption performance by making the outer diameter of the tire larger with respect to a ground-contact width of the tire than that of a conventional tire.

However, in such a tire having a narrow width and a large diameter, the ground-contact area of the tire is decreased, so that there is a problem that it is difficult to ensure on-ice performance (grip performance on ice).

In order to improve the on-ice performance of a studless tire, as a blending formula for the tread of the studless tire, a blending formula that imparts low stiffness and softness is generally adopted. However, there is a problem that steering stability is decreased due to a decrease in the stiffness of the tire. US 2017/0197465 A1 discloses that the sectional width SW and the outer diameter OD (mm) of a tire satisfy a relation of $2.135 \times$ SW+$282.3 \leq$OD if the tire has a sectional width SW of 165 mm or more, when the tire is assembled to a rim and filled with an internal pressure of 250 kPa or more. CN104130465 A describes a snow tire made from a rubber composition having a tan $\delta$ at -30°C of 0.87122. According to EP 3 406 664 A1, a tire made from a rubber composition that has a storage modulus E' at -20°C between 5 and 10 MPa and satisfies the relation $0.02 \times$(E'-20°C) + $0.25 \leq$(tan $\delta$-20°C)$\leq$0.65 shows improved ice performance. EP 3 000 616 A1 discloses the E* at +50°C and the tan $\delta$ at -10°C of a rubber composition for tires.

An object of the present invention is to provide a tire having improved on-ice performance.

SUMMARY OF THE INVENTION

As a result of a thorough study, the present inventors have found that a tire having improved on-ice performance can be obtained by setting the viscoelasticity of a tread rubber so as to satisfy a specific condition in a tire having a cross-section width and an outer diameter that satisfy predetermined requirements, and have completed the present invention.

Specifically, the present invention is directed to a tire as defined in independent claim 1. Preferred embodiments are defined in the dependent claims.

The tire according to the present invention having a cross-section width and an outer diameter that satisfy predetermined requirements and having tread rubber viscoelasticity that is set so as to satisfy a specific condition, has improved on-ice performance.

DESCRIPTION OF THE PREFERRED EMBODIMENTS

The tire according to the present invention is characterized in that, when a tire cross-section width and a tire outer diameter in a state where the tire is fitted on a rim and an internal pressure of the tire is not less than 250 kPa are denoted by Wt (mm) and Dt (mm), respectively, Wt and Dt satisfy any of the following expressions (1), (2), and (3).

$$\text{Wt} < 225 \text{ and Dt} \geq 59.078 \times \text{Wt} \char94 0.460 \quad (1)$$

$$225 \leq \text{Wt} < 235 \text{ and Dt} \geq 59.078 \times \text{Wt} \char94 0.620 - 967.673 \quad (2)$$

$$235 \leq \text{Wt and Dt} \geq \text{Wt} \char94 0.6 + 750 \quad (3)$$

When the tire cross-section width and the tire outer diameter satisfy the above requirements, heat generation properties during normal running can be reduced, so that low fuel consumption performance can be improved.

The tire according to the present invention is further characterized in that a ratio (-30°C tan$\delta$/0°C E*) of tan$\delta$ (-30°C tan$\delta$) at -30°C to a complex elastic modulus (MPa) at 0°C (0°C E*) of a rubber composition for forming a tread is 0.120 to 0.500. Accordingly, the obtained tire has improved on-ice performance. The reason for this is considered as follows, although not intended to be bound by a theory.

The loss tangent tanδ indicates the amount of energy consumed in the process of applying strain, and this consumed energy is converted into heat. As the value of tanδ becomes larger, the lost energy increases, so that the hysteresis friction increases and the grip force improves. However, if tanδ is excessively large, the heat generated by a tread rubber melts the ice on an ice road surface to generate water, so that the contact area between the tread rubber and the road surface decreases, and the grip force decreases.

The complex elastic modulus E* indicates the stress with respect to strain applied periodically. As the value of E* becomes larger, the stiffness becomes higher and the steering stability improves. If the value of E* is excessively large, damping properties tend to decrease and ride comfort tends to deteriorate.

It is considered that, when the ratio (-30°C tanδ/0°C E*) of -30°C tanδ to 0°C E* of the rubber composition satisfies the above requirement, it is possible to well-balance both the stiffness and the grip performance of the obtained rubber composition. A tire including a tread formed from such a rubber composition has good propagation of force to a tread rubber and can maximize grip force on ice. Thus, it is considered that the on-ice performance of the tire is improved.

The "-30°C tanδ" in the present invention refers to loss tangent tanδ under the conditions of a temperature of -30°C, a frequency of 10 Hz, and an elongation strain of 2.5%. The -30°C tanδ of the rubber composition is preferably not greater than 2.40, more preferably not greater than 2.20, and further preferably not greater than 2.10. In a tire having a narrow width and a large diameter that satisfy any of the above relational expressions (1), (2), and (3), it is necessary to make the value of tanδ larger than that of a normal tire in order to compensate for the grip force lost due to the narrow width. On the other hand, it is necessary to increase the filling air pressure in order to maintain a certain load capacity even if the ground-contact area becomes smaller. As a result, a water removal effect is improved, and it becomes easier to ensure a ground-contact area between a tread rubber and a road surface. From these facts, grip performance on ice can be ensured even in such a high tanδ range. In addition, from the viewpoint of on-ice performance, the -30°C tanδ of the rubber composition is preferably not less than 0.51, more preferably not less than 0.54, and further preferably not less than 0.57.

The "0°C E*" in the present invention refers to a complex elastic modulus E* under the conditions of a temperature of 0°C, a frequency of 10 Hz, and an elongation strain of 2.5%. The 0°C E* of the rubber composition is preferably not less than 3.0 MPa and more preferably not less than 3.2 MPa. In addition, the 0°C E* of the rubber composition is preferably not greater than 4.3 MPa and more preferably not greater than 4.2 MPa.

The ratio (-30°C tanδ/0°C E*) of the -30°C tanδ to the 0°C E* (MPa) of the rubber composition is not less than 0.120, preferably not less than 0.125, more preferably not less than 0.150, and further preferably not less than 0.170. In addition, the -30°C tanδ/0°C E* is not greater than 0.500, preferably not greater than 0.480, and more preferably not greater than 0.450.

The "normal rim" is a rim that is defined, in a standard system including a standard on which the tire is based, by the standard for each tire, and is, for example, the "standard rim" in the JATMA standard, the "Design Rim" in the TRA standard, or the "Measuring Rim" in the ETRTO standard.

The "normal internal pressure" is an air pressure that is defined, in a standard system including a standard on which the tire is based, by the standard for each tire, and is the "maximum air pressure" in the JATMA standard, the maximum value indicated in the table "TIRE LOAD LIMITS AT VARIOUS COLD INFLATION PRESSURES" in the TRA standard, or the "INFLATION PRESSURE" in the ETRTO standard.

The "normal load" is a load that is defined, in a standard system including a standard on which the tire is based, by the standard for each tire, and is the "maximum load capacity" in the JATMA standard, the maximum value indicated in the table "TIRE LOAD LIMITS AT VARIOUS COLD INFLATION PRESSURES" in the TRA standard, or the "LOAD CAPACITY" in the ETRTO standard.

The "maximum load capacity" is a load capacity value (kg) when the tire having a load index (LI) is filled with the corresponding maximum air pressure (kPa) under the use conditions specified in the JATMA standard.

A procedure for producing a tire according to an embodiment of the present disclosure will be described in detail below. It should be noted that the following description is an example for describing the present invention, and does not mean that the technical scope of the present invention is limited to the scope of the description. In the present description, when a numerical range is indicated by using "to", the numerical values at both ends thereof are included.

<Rubber Component>

The rubber composition according to the present invention preferably contains an isoprene-based rubber, and more preferably contains an isoprene-based rubber and a butadiene rubber (BR), as a rubber component. In addition, the rubber component may be a rubber component including only an isoprene-based rubber and a BR.

(Isoprene-Based Rubber)

As the isoprene-based rubber, for example, rubbers that are generally used in the tire industry, such as isoprene rubber (IR) and natural rubber, can be used. Examples of the natural rubber include unmodified natural rubber (NR) as well as modified natural rubbers such as epoxidized natural rubber (ENR), hydrogenated natural rubber (HNR), deproteinized natural rubber (DPNR), ultra-pure natural rubber, and grafted natural rubber. One of these isoprene-based rubbers may be used alone, or two or more of these isoprene-based rubbers may be used in combination.

The NR is not particularly limited, NRs that are generally used in the tire industry can be used, and examples of the NR include SIR20, RSS#3, and TSR20.

In the case of containing an isoprene-based rubber, from the viewpoint of complex elastic modulus, the amount of the isoprene-based rubber in 100% by mass of the rubber component is preferably not less than 10% by mass, more preferably not less than 15% by mass, further preferably not less than 20% by mass, and particularly preferably not less than 25% by mass. Meanwhile, from the viewpoint of ensuring damping properties at a tread portion, the amount is preferably not greater than 80% by mass, more preferably not greater than 70% by mass, further preferably not greater than 60% by mass, and particularly preferably not greater than 50% by mass.

(BR)

The BR is not particularly limited, and, for example, BRs that are generally used in the tire industry, such as a BR having a cis content (cis-1,4 bond content) of less than 50% (low-cis BR), a BR having a cis content of not less than 90% (high-cis BR), a rare-earth element-based butadiene rubber synthesized using a rare-earth element-based catalyst (rare-earth element-based BR), a BR containing syndiotactic polybutadiene crystals (SPB-containing BR), and modified BRs (high-cis modified BR, low-cis modified BR), can be used. Among them, modified BRs are suitably used. As these BRs, BRs commercially available from Ube Industries, Ltd., Sumitomo Chemical Company, Limited, JSR Corporation, LANXESS, etc., can be used. One of these BRs may be used alone, or two or more of these BRs may be used in combination.

As the rare earth element-based BR, BRs that are generally used in the rubber industry can be used. As the rare earth element-based catalyst used for the synthesis (polymerization) of the rare earth element-based BR, known catalysts can be used, and examples of such a catalyst include a catalyst containing a lanthanum series rare earth element compound, an organoaluminium compound, an aluminoxane, or a halogen-containing compound and optionally containing a Lewis base. Among them, an Nd catalyst using a neodymium (Nd)-containing compound as a lanthanum series rare earth element compound is preferable from the viewpoint of obtaining a BR having a high cis content and a low vinyl content.

An example of the SPB-containing BR is not a BR in which 1,2-syndiotactic polybutadiene crystals are merely dispersed, but a BR in which 1,2-syndiotactic polybutadiene crystals are dispersed in a state of being chemically bound to the BR.

Examples of modified BRs include a BR obtained by polymerizing 1,3-butadiene with a lithium initiator and then adding a tin compound to the polymerized 1,3-butadiene and in which the terminals of the modified BR molecules are bound to each other through tin-carbon bonds (tin-modified BR), and a butadiene rubber having a condensed alkoxysilane compound at an active terminal thereof (modified BR for silica).

From the viewpoint of wear resistance, the weight-average molecular weight (Mw) of the BR is preferably not less than 300 thousand, more preferably not less than 350 thousand, and further preferably not less than 400 thousand. From the viewpoint of crosslinking uniformity, etc., the Mw is preferably not greater than 2 million and more preferably not greater than 1 million. The Mw can be obtained by conversion, based on a polystyrene standard, of a value measured by gel permeation chromatography (GPC) (GPC-8000 series manufactured by Tosoh Corporation, detector: differential refractometer, column: TSKgel SuperMultipore HZ-M manufactured by Tosoh Corporation).

In the case of containing a BR, the amount of the BR in 100% by mass of the rubber component is preferably not less than 10% by mass, more preferably not less than 20% by mass, further preferably not less than 30% by mass, and particularly preferably not less than 35% by mass. In addition, the amount is preferably not greater than 80% by mass, more preferably not greater than 75% by mass, further preferably not greater than 70% by mass, and particularly preferably not greater than 65% by mass.

In the case of containing a modified BR, the amount of the modified BR in 100% by mass of the rubber component is preferably not less than 10% by mass, more preferably not less than 20% by mass, further preferably not less than 30% by mass, and particularly preferably not less than 35% by mass. In addition, the amount is preferably not greater than 80% by mass, more preferably not greater than 75% by mass, further preferably not greater than 70% by mass, and particularly preferably not greater than 65% by mass.

(Other Rubber Components)

As the rubber component according to the present invention, a rubber component other than the isoprene-based rubber and the BR may be contained. As another rubber component, crosslinkable rubber components that are generally used in the rubber industry can be used, and examples thereof include styrene-butadiene rubber (SBR), styrene-isoprene-butadiene copolymer rubber (SIBR), styrene-isobutylene-styrene block copolymer (SIBS), chloroprene rubber (CR), acrylonitrile-butadiene rubber (NBR), hydrogenated nitrile rubber (HNBR), isobutylene-isoprene-rubber (IIR), ethylene-propylene rubber, polynorbornene rubber, silicone rubber, polyethylene chloride rubber, fluororubber (FKM), acrylic rubber (ACM), and hydrin rubber. One of these other rubber components may be used alone, or two or more of these other rubber components may be used in combination.

<Reinforcing Filler>

The rubber composition according to the present invention preferably contains silica, and may further contain carbon black and another reinforcing filler, as a reinforcing filler. The reinforcing filler preferably includes carbon black and silica, and may be a reinforcing filler including only carbon black and silica.

(Silica)

The silica is not particularly limited, and silicas that are generally used in the tire industry, such as silica prepared by a dry process (anhydrous silica) and silica prepared by a wet process (hydrous silica), can be used. Among them, hydrous silica prepared by a wet process is preferable for the reason that it has a higher silanol group content. One of these silicas may be used alone, or two or more of these silicas may be used in combination.

From the viewpoint of ensuring reinforcing properties and damping properties at the tread portion, the nitrogen adsorption specific surface area ($N_2SA$) of the silica is preferably not less than 140 $m^2$/g, more preferably not less than 150 $m^2$/g, further preferably not less than 160 $m^2$/g, and particularly preferably not less than 170 $m^2$/g. In addition, from the viewpoint of heat generation properties and processability, the $N_2SA$ of the silica is preferably not greater than 350 $m^2$/g, more preferably not greater than 300 $m^2$/g, and further preferably not greater than 250 $m^2$/g. The $N_2SA$ of the silica in the present description is a value measured by the BET method according to ASTM D3037-93.

In the case of containing silica, from the viewpoint of on-ice performance, the amount of the silica per 100 parts by mass of the rubber component is preferably not less than 30 parts by mass, more preferably not less than 40 parts by mass, further preferably not less than 50 parts by mass, and particularly preferably not less than 55 parts by mass. In addition, from the viewpoint of reducing the specific gravity of rubber to achieve weight reduction and the viewpoint of suppressing heat generation of the tread portion, the amount is preferably not greater than 105 parts by mass, more preferably not greater than 95 parts by mass, further preferably not greater than 90 parts by mass, and particularly preferably not greater than 85 parts by mass.

(Silane Coupling Agent)

The silica is preferably used in combination with a silane coupling agent. The silane coupling agent is not particularly limited, and any silane coupling agent that is conventionally used in combination with silica in the rubber industry can be used. Specific examples of the silane coupling agent include: silane coupling agents each having a sulfide group such as bis(3-triethoxysilylpropyl)disulfide and bis(3-triethoxysilylpropyl)tetrasulfide; silane coupling agents each having a mercapto group such as 3-mercaptopropyltrimethoxysilane, 3-mercaptopropyltriethoxysilane, 2-mercaptoethyltrimethoxysilane, 2-mercaptoethyltriethoxysilane, NXT-Z30, NXT-Z45, NXT-Z60, and NXT-Z100 manufactured by Momentive Performance Materials, Inc., and Si363 manufactured by Evonik Degussa GmbH; silane coupling agents each having a thioester group such as 3-octanoylthio-1-propyltriethoxysilane, 3-hexanoylthio-1-propyltriethoxysilane, and 3-octanoylthio-1-propyltrimethoxysilane; silane coupling agents each having a vinyl group such as vinyltriethoxysilane and vinyltrimethoxysilane; silane coupling agents each having an amino group such as 3-aminopropyltriethoxysilane, 3-aminopropyltrimethoxysilane, and 3-(2-aminoethyl)aminopropyltriethoxysilane; silane coupling agents each having a glycidoxy group such as γ-glycidoxypropyltriethoxysilane and γ-glycidoxypropyltrimethoxysilane; silane coupling agents each having a nitro group such as 3-nitropropyltrimethoxysilane and 3-nitropropyltriethoxysilane; and silane coupling agents each having a chloro group such as 3-chloropropyltrimethoxysilane and 3-chloropropyltriethoxysilane. Among them, silane coupling agents each having a sulfide group, silane coupling agents each having a mercapto group, and silane coupling agents each having a thioester group are preferable, and silane coupling agents each having a sulfide group are more preferable. One of these silane coupling agents may be used alone, or two or more of these silane coupling agents may be used in combination.

In the case of containing a silane coupling agent, from the viewpoint of enhancing the dispersibility of the silica, the amount of the silane coupling agent per 100 parts by mass of the rubber component is preferably not less than 0.5 parts by mass, more preferably not less than 1.0 part by mass, further preferably not less than 2.0 parts by mass, and particularly preferably not less than 4.0 parts by mass. In addition, from the viewpoint of preventing a decrease in wear resistance, the amount is preferably not greater than 20 parts by mass, more preferably not greater than 15 parts by mass, further preferably not greater than 12 parts by mass, and particularly preferably not greater than 10 parts by mass.

(Carbon Black)

The carbon black is not particularly limited, and carbon blacks that are generally used in the tire industry, such as GPF, FEF, HAF, ISAF, and SAF, can be used. Specifically, N110, N115, N120, N125, N134, N135, N219, N220, N231, N234, N293, N299, N326, N330, N339, N343, N347, N351, N356, N358, N375, N539, N550, N582, N630, N642, N650, N660, N683, N754, N762, N765, N772, N774, N787, N907, N908, N990, N991, etc., are suitable for use. Other than these, products synthesized by Sumitomo Rubber Industries, Ltd. are also suitable for use. One of these carbon blacks may be used alone, or two or more of these carbon blacks may be used in combination.

From the viewpoint of weather resistance and reinforcing properties, the nitrogen adsorption specific surface area ($N_2SA$) of the carbon black is preferably not less than 40 $m^2/g$, more preferably not less than 50 $m^2/g$, and further preferably not less than 60 $m^2/g$. In addition, from the viewpoint of dispersibility and low fuel consumption performance, the $N_2SA$ of the carbon black is preferably not greater than 250 $m^2/g$, more preferably not greater than 200 $m^2/g$, further preferably not greater than 150 $m^2/g$, further preferably not greater than 90 $m^2/g$, further preferably not greater than 70 $m^2/g$, and particularly preferably not greater than 50 $m^2/g$. In the present description, the $N_2SA$ of the carbon black is a value measured according to the method A of JIS K 6217-2 "Carbon black for rubber industry-Fundamental characteristics-Part 2: Determination of specific surface area-Nitrogen adsorption methods-Single-point procedures".

In the case of containing carbon black, from the viewpoint of weather resistance and reinforcing properties, the amount of the carbon black per 100 parts by mass of the rubber component is preferably not less than 1 part by mass, more preferably not less than 3 parts by mass, and further preferably not less than 5 parts by mass. In addition, from the viewpoint of suppressing heat generation of the tread portion, the amount is preferably not greater than 40 parts by mass, more preferably not greater than 30 parts by mass, further preferably not greater than 20 parts by mass, and particularly preferably not greater than 10 parts by mass.

(Other Reinforcing Fillers)

The reinforcing filler other than the silica and the carbon black is not particularly limited, and, for example, any of reinforcing fillers that are generally used in this field, such as aluminum hydroxide, alumina (aluminum oxide), calcium carbonate, magnesium sulfate, talc, and clay, can be used. Among them, clay is preferable. One of these reinforcing fillers may be used alone, or two or more of these reinforcing fillers may be used in combination.

The total amount of the reinforcing filler per 100 parts by mass of the rubber component is preferably not less than 20 parts by mass, more preferably not less than 30 parts by mass, further preferably not less than 40 parts by mass, and particularly preferably not less than 50 parts by mass. In addition, the amount is preferably not greater than 110 parts by mass, more preferably not greater than 100 parts by mass, further preferably not greater than 95 parts by mass, and particularly preferably not greater than 90 parts by mass.

The content of the silica in 100% by mass of the entire reinforcing filler is preferably not less than 50% by mass, more preferably not less than 60% by mass, further preferably not less than 70% by mass, and particularly preferably not less than 80% by mass. In addition, the content of the silica is preferably not greater than 99% by mass, more preferably not greater than 97% by mass, and further preferably not greater than 95% by mass.

<Softener>

The rubber composition according to the present invention preferably contains a softener in order to improve on-ice performance. Examples of the softener include a resin component, an oil, and a liquid rubber. The -30°C tan$\delta$ and the 0°C $E^*$ can be adjusted as appropriate on the basis of the blending amount of the softener.

The resin component is not particularly limited, and examples of the resin component include petroleum resins, terpene-based resins, rosin-based resins, and phenol-based resins, all of which are commonly used in the tire industry. Among them, petroleum resins and terpene-based resins are preferable. One of these resin components may be used alone, or two or more of these resin components may be used in combination.

Examples of the petroleum resins include C5-based petroleum resins, aromatic petroleum resins, and C5C9-based petroleum resins.

In the present description, the "C5-based petroleum resin" refers to a resin obtained by polymerizing a C5 fraction. Examples of the C5 fraction include petroleum fractions having 4 to 5 carbon atoms such as cyclopentadiene, pentene, pentadiene, and isoprene. As the C5-based petroleum resin, a dicyclopentadiene resin (DCPD resin) is suitably used.

In the present description, the "aromatic petroleum resin" refers to a resin obtained by polymerizing a C9 fraction, and may be a hydrogenated or modified product of the resin. Examples of the C9 fraction include petroleum fractions having 8 to 10 carbon atoms such as vinyltoluene, alkylstyrene, indene, and methylindene. As specific examples of the aromatic petroleum resin, for example, coumarone-indene resins, coumarone resins, indene resins, and aromatic vinyl-based resins are suitably used. As the aromatic vinyl-based resin, a homopolymer of $\alpha$-methylstyrene or styrene or a copolymer of $\alpha$-methylstyrene and styrene is preferable, and a copolymer of $\alpha$-methylstyrene and styrene is more preferable, for the reason that the polymer is economic, is easily processed, and has excellent heat generation properties. As the aromatic vinyl-based resin, for example, products commercially available from Arizona Chemical Company, Eastman Chemical Company, etc., can be used.

In the present description, the "C5C9-based petroleum resin" refers to a resin obtained by copolymerizing the C5 fraction and the C9 fraction, and may be a hydrogenated or modified product of the resin. Examples of the C5 fraction and the C9 fraction include the above-described petroleum fractions. As the C5C9-based petroleum resin, for example, products commercially available from Tosoh Corporation, Zibo Luhua Hongjin New Material Co., Ltd., etc., can be used.

Examples of the terpene-based resins include: a polyterpene resin composed of at least one compound selected from among terpene compounds such as $\alpha$-pinene, $\beta$-pinene, limonene, and dipentene; an aromatic modified terpene resin formed from the terpene compound and an aromatic compound; a terpene phenol resin formed from the terpene compound and a phenol-based compound; and resins obtained by hydrogenating these terpene-based resins (hydrogenated terpene-based resins). Examples of the aromatic compound used as a raw material for the aromatic modified terpene resin include styrene, $\alpha$-methylstyrene, vinyltoluene, and divinyltoluene. Examples of the phenol-based compound used as a raw material for the terpene phenol resin include phenol, bisphenol A, cresol, and xylenol.

From the viewpoint of steering stability, the softening point of the resin component is preferably not lower than 60°C and more preferably not lower than 65°C. In addition, from the viewpoint of processability and improvement of the dispersibility of the rubber component and the filler, the softening point is preferably not higher than 150°C, more preferably not higher than 140°C, and further preferably not higher than 130°C. In the present description, the softening point can be defined as a softening point that is measured with a ring and ball softening point measuring device according to JIS K6220-1: 2001 and that is a temperature at which a ball has descended.

In the case of containing a resin component, from the viewpoint of on-ice performance, the amount of the resin component per 100 parts by mass of the rubber component is preferably not less than 1 part by mass, more preferably not less than 5 parts by mass, further preferably not less than 10 parts by mass, and particularly preferably not less than 12 parts by mass. In addition, from the viewpoint of reducing heat generation properties, the amount is preferably not greater than 60 parts by mass, more preferably not greater than 50 parts by mass, further preferably not greater than 40 parts by mass, and particularly preferably not greater than 30 parts by mass.

Examples of the oil include process oils, vegetable fats and oils, and animal fats and oils. Examples of the process oils include paraffinic process oils, naphthenic process oils, and aromatic process oils. In addition, for an environmental measure, a process oil having a low content of a polycyclic aromatic (PCA) compound can also be used. Examples of the low PCA content process oil include a mild extraction solvate (MES), a treated distillate aromatic extract (TDAE), and a heavy naphthenic oil.

In the case of containing an oil, from the viewpoint of processability, the amount of the oil per 100 parts by mass of the rubber component is preferably not less than 1 part by mass, more preferably not less than 5 parts by mass, further preferably not less than 10 parts by mass, and particularly preferably not less than 20 parts by mass. In addition, from the viewpoint of low fuel consumption performance and complex elastic modulus, the amount is preferably not greater than 100 parts by mass, more preferably not greater than 80 parts by mass, and further preferably not greater than 60 parts by mass. In the present description, the amount of the oil also includes the amount of oil included in oil-extended rubber.

Examples of the liquid rubber include liquid butadiene rubber (liquid BR), liquid styrene-butadiene rubber (liquid SBR), liquid isoprene rubber (liquid IR), liquid styrene-isoprene rubber (liquid SIR), and liquid farnesene rubber, and liquid farnesene rubber is preferable. One of these liquid rubbers may be used alone, or two or more of these liquid rubbers may be used in combination.

The liquid farnesene rubber may be a homopolymer of farnesene (farnesene homopolymer), or may be a copolymer of farnesene and a vinyl monomer (farnesene-vinyl monomer copolymer). Examples of the vinyl monomer include: aromatic vinyl compounds such as styrene, 2-methylstyrene, 3-methylstyrene, 4-methylstyrene, $\alpha$-methylstyrene, 2,4-dimethylstyrene, 2,4-diisopropylstyrene, 4-tert-butylstyrene, 5-t-butyl-2-methylstyrene, vinylethylbenzene, divinylbenzene, trivinylbenzene, divinylnaphthalene, tert-butoxystyrene, vinylbenzyldimethylamine, (4-vinylbenzyl)dimethylaminoethyl ether, N,N-dimethylaminoethylstyrene, N,N-dimethylaminomethylstyrene, 2-ethylstyrene, 3-ethylstyrene, 4-ethylstyrene, 2-t-butylstyrene, 3-t-butylstyrene, 4-t-butylstyrene, vinylxylene, vinylnaphthalene, vinyltoluene, vinylpyridine, diphenylethylene, and tertiary amino group-containing diphenylethylene; and conjugated diene compounds such as butadiene and isoprene. Among them, styrene and butadiene are preferable. That is, as the farnesene-vinyl monomer copolymer, a copolymer of farnesene and styrene (farnesene-styrene copolymer) and a copolymer of farnesene and butadiene (farnesene-butadiene copolymer) are preferable. By blending the farnesene-styrene copolymer, the effect of improving steering stability can be enhanced, and, by blending the farnesene-butadiene copolymer, the effect of improving on-ice performance and wear resistance can be enhanced.

In the case of containing a liquid rubber, the amount of the liquid rubber per 100 parts by mass of the rubber component is preferably not less than 1 part by mass, more preferably not less than 2 parts by mass, further preferably not less than 3 parts by mass, and particularly preferably not less than 5 parts by mass. In addition, the amount of the liquid rubber is preferably not greater than 50 parts by mass, more preferably not greater than 40 parts by mass, and further preferably not greater than 20 parts by mass.

In the case of containing a softener, from the viewpoint of on-ice performance, the amount of the softener (in the case of using a plurality of softeners in combination, the sum of the amounts of all the softeners) per 100 parts by mass of the rubber component is preferably not less than 32 parts by mass, more preferably not less than 35 parts by mass, further preferably not less than 40 parts by mass, further preferably not less than 43 parts by mass, and particularly preferably not less than 48 parts by mass. In addition, from the viewpoint of processability, the amount is preferably not greater than 140 parts by mass, more preferably not greater than 120 parts by mass, further preferably not greater than 100 parts by mass, and particularly preferably not greater than 80 parts by mass.

<Other Ingredients>

In addition to the above-described components, the rubber composition according to the present invention can contain, as appropriate, ingredients that are conventionally and generally used in the tire industry, for example, a wax, a processing aid, stearic acid, zinc oxide, an antioxidant, a vulcanizing agent, a vulcanization accelerator, etc.

In the case of containing a wax, from the viewpoint of weather resistance of rubber, the amount of the wax per 100 parts by mass of the rubber component is preferably not less than 0.5 parts by mass and more preferably not less than 1 part by mass. In addition, from viewpoint of preventing whitening of a tire due to blooming, the amount is preferably not greater than 10 parts by mass and more preferably not greater than 5 parts by mass.

Examples of the processing aid include fatty acid metal salts, fatty acid amides, amide esters, silica surfactants, fatty acid esters, mixtures of fatty acid metal salts and amide esters, and mixtures of fatty acid metal salts and fatty acid amides. One of these processing aids may be used alone, or two or more of these processing aids may be used in combination. As the processing aid, for example, products commercially available from SCHILL+SEILACHER GmbH, Performance Additives Sdn. Bhd., etc., can be used.

In the case of containing a processing aid, from the viewpoint of exhibiting the effect of improving processability, the amount of the processing aid per 100 parts by mass of the rubber component is preferably not less than 0.5 parts by mass and more preferably not less than 1 part by mass. In addition, from the viewpoint of wear resistance and fracture strength, the amount is preferably not greater than 10 parts by mass and more preferably not greater than 8 parts by mass.

In the case of containing stearic acid, from the viewpoint of processability, the amount of the stearic acid per 100 parts by mass of the rubber component is preferably not less than 0.5 parts by mass and more preferably not less than 1 part by mass. In addition, from the viewpoint of vulcanization rate, the amount is preferably not greater than 10 parts by mass and more preferably not greater than 5 parts by mass.

In the case of containing zinc oxide, from the viewpoint of processability, the amount of the zinc oxide per 100 parts by mass of the rubber component is preferably not less than 0.5 parts by mass and more preferably not less than 1 part by mass. In addition, from the viewpoint of wear resistance, the amount is preferably not greater than 10 parts by mass and more preferably not greater than 5 parts by mass.

The antioxidant is not particularly limited, but examples of the antioxidant include antioxidants such as amine-based compounds, quinoline-based compounds, quinone-based compounds, phenol-based compounds, imidazole-based compounds, and carbamic acid metal salts. Phenylenediamine-based antioxidants such as N-(1,3-dimethylbutyl)-N'-phenyl-p-phenylenediamine, N-isopropyl-N'-phenyl-p-phenylenediamine, N,N'-diphenyl-p-phenylenediamine, N,N'-di-2-naphthyl-p-phenylenediamine, N-cyclohexyl-N'-phenyl-p-phenylenediamine, N,N'-bis(1-methylheptyl)-p-phenylenediamine, N,N'-bis(1,4-dimethylpentyl)-p-phenylenediamine, N,N'-bis(1-ethyl-3-methylpentyl)-p-phenylenediamine, N-4-methyl-2-pentyl-N'-phenyl-p-phenylenediamine, N,N'-diaryl-p-phenylenediamine, hindered diaryl-p-phenylenediamine, phenylhexyl-p-phenylenediamine, and phenyloctyl-p-phenylenediamine, and quinoline-based antioxidants such as a 2,2,4-trimethyl-1,2-dihydroquinoline polymer and 6-ethoxy-2,2,4-trimethyl-1,2-dihydroquinoline are preferable. One of these antioxidants may be used alone, or two or more of these antioxidants may be used in combination.

In the case of containing an antioxidant, from the viewpoint of ozone crack resistance of rubber, the amount of the antioxidant per 100 parts by mass of the rubber component is preferably not less than 0.5 parts by mass and more preferably not less than 1 part by mass. In addition, from the viewpoint of wear resistance, the amount is preferably not greater than 10 parts by mass and more preferably not greater than 5 parts by mass.

As the vulcanizing agent, sulfur is suitably used. As the sulfur, powdery sulfur, oil-treated sulfur, precipitated sulfur, colloidal sulfur, insoluble sulfur, highly dispersible sulfur, etc., can be used.

In the case of containing sulfur as the vulcanizing agent, from the viewpoint of ensuring a sufficient vulcanization reaction, the amount of the sulfur per 100 parts by mass of the rubber component is preferably not less than 0.1 parts by mass and more preferably not less than 0.3 parts by mass. In addition, from the viewpoint of prevention of deterioration, the amount is preferably not greater than 5.0 parts by mass, more preferably not greater than 4.0 parts by mass, and further preferably not greater than 3.0 parts by mass. In the case of using oil-containing sulfur as the vulcanizing agent, the amount of the vulcanizing agent is the total amount of pure sulfur contained in the oil-containing sulfur.

Examples of vulcanizing agents other than sulfur include alkylphenol-sulfur chloride condensates, 1,6-hexamethylene sodium dithiosulfate dihydrate, and 1,6-bis(N,N'-dibenzylthiocarbamoyldithio)hexane. As these vulcanizing agents other than sulfur, products commercially available from Taoka Chemical Co., Ltd., LANXESS, Flexsys, etc., can be used.

Examples of the vulcanization accelerator include sulfenamide-based vulcanization accelerators, thiazole-based vulcanization accelerators, thiuram-based vulcanization accelerators, thiourea-based vulcanization accelerators, guanidine-based vulcanization accelerators, dithiocarbamic acid-based vulcanization accelerators, aldehyde-amine-based vulcanization accelerators, aldehyde-ammonia-based vulcanization accelerators, imidazoline-based vulcanization accelerators, and xanthate-based vulcanization accelerators. One of these vulcanization accelerators may be used alone, or two or more of these vulcanization accelerators may be used in combination. Among them, sulfenamide-based vulcanization accelerators, thiazole-based vulcanization accelerators, and guanidine-based vulcanization accelerators are preferable, and these vulcanization accelerators are more preferably used in combination.

Examples of the sulfenamide-based vulcanization accelerators include N-tert-butyl-2-benzothiazolyl sulfenamide (TBBS), N-cyclohexyl-2-benzothiazolyl sulfenamide (CBS), and N,N-dicyclohexyl-2-benzothiazolyl sulfenamide (DCBS). Among them, N-cyclohexyl-2-benzothiazolyl sulfenamide is preferable.

Examples of the thiazole-based vulcanization accelerators include 2-mercaptobenzothiazole (MBT), a cyclohexylamine salt of 2-mercaptobenzothiazole, and di-2-benzothiazolyl disulfide. Among them, 2-mercaptobenzothiazole is preferable.

Examples of the guanidine-based vulcanization accelerators include 1,3-diphenylguanidine (DPG), 1,3-di-o-tolylguanidine, 1-o-tolylbiguanide, a di-o-tolylguanidine salt of dicatechol borate, 1,3-di-o-cumenylguanidine, 1,3-di-o-biphenylguanidine, and 1,3-di-o-cumenyl-2-propionylguanidine. Among them, 1,3-diphenylguanidine is preferable.

In the case of containing a vulcanization accelerator, the amount of the vulcanization accelerator per 100 parts by mass of the rubber component is preferably not less than 1 part by mass and more preferably not less than 2 parts by mass. In addition, the amount is preferably not greater than 8 parts by mass, more preferably not greater than 7 parts by mass, and further preferably not greater than 6 parts by mass.

The rubber composition according to the present invention can be produced by a known method. For example, the rubber composition according to the present invention can be produced by a method in which the components other than the vulcanizing agent and the vulcanization accelerator, among the above respective components, are kneaded by using a known kneading machine generally used in the rubber industry such as a Banbury mixer, a kneader, and an open roll, then the vulcanizing agent and the vulcanization accelerator are added to the mixture, the mixture is further kneaded, and thereafter vulcanization is performed. For example, kneading is performed at 80°C to 170°C for 1 to 30 minutes in the kneading step, and vulcanization is performed at 130°C to 190°C for 3 to 20 minutes in the vulcanization step.

[Tire]

A tire including a tread formed from the above rubber composition can be produced by a normal method. Specifically, the tire can be produced by extruding an unvulcanized rubber composition obtained by blending the above respective components to the rubber component as necessary, so as to correspond to the shape of a side reinforcing layer, attaching the extruded rubber composition together with other tire members on a tire-shaping machine, shaping these members by a normal method to form an unvulcanized tire, and heating and pressurizing the unvulcanized tire in a vulcanizing machine.

The category of the tire according to the present invention is not particularly limited, but the tire according to the present invention has excellent on-ice performance, and thus is preferably used as a tire for winter such as a studless tire and a snow tire, or a tire for all seasons, and more preferably used as a studless tire.

EXAMPLES

The present invention will be described by means of examples, but the present invention is not limited to these examples.

Various chemicals used in examples and comparative examples are collectively described below.

NR: TSR20

BR 1: BR730 (BR synthesized by using an Nd catalyst, cis-1,4 bond content: 96.6% by mass, Mw: 580 thousand) manufactured by JSR Corporation

BR 2: BR1250H (tin-modified BR, polymerized using lithium as an initiator, cis-1,4 bond content: 40% by mass, Mw: 570 thousand) manufactured by Zeon Corporation

Carbon black: DIABLACK N330 ($N_2SA$: 79 $m^2$/g) manufactured by Mitsubishi Chemical Corporation

Silica 1: ULTRASIL (registered trademark) VN3 ($N_2SA$: 175 $m^2$/g) manufactured by Evonik Degussa GmbH

Silica 2: Zeosil 115GR ($N_2SA$: 110 $m^2$/g) manufactured by Rhodia

Clay: Crown Clay (average particle diameter: 0.6 $\mu$m) manufactured by Southeastern Clay Company

Silane coupling agent: Si266 (bis(3-triethoxysilylpropyl)disulfide) manufactured by Evonik Degussa GmbH

Oil 1: Diana Process NH-70S (aromatic process oil) manufactured by Idemitsu Kosan Co., Ltd.

Oil 2: Diana Process PW-380 (paraffinic process oil) manufactured by Idemitsu Kosan Co., Ltd.

Resin component 1: PX1150N (non-hydrogenated polyterpene resin, SP value: 8.26, softening point: 115°C, Tg: 65°C) manufactured by Yasuhara Chemical Co., Ltd.

Resin component 2: Marukarez M M-890A (dicyclopentadiene resin, softening point: 105°C) manufactured by Maruzen Petrochemical Co., Ltd.

Liquid rubber: a liquid farnesene rubber (farnesene-styrene copolymer) produced in Production Example 1 described later

Wax: OZOACE 0355 manufactured by NIPPON SEIRO CO., LTD.

Processing aid: Struktol WB16 (mixture of fatty acid ester and a fatty acid metal salt) manufactured by SCHILL+SEILACHER GmbH

Stearic acid: bead stearic acid, Tsubaki, manufactured by NOF Corporation

Zinc oxide: Zinc Oxide Type-1 manufactured by Mitsui Mining & Smelting Co., Ltd.

Antioxidant 1: ANTIGENE 6C (N-phenyl-N'-(1,3-dimethylbutyl)-p-phenylenediamine) manufactured by Sumitomo Chemical Company, Limited

Antioxidant 2: ANTIGENE RD (2,2,4-trimethyl-1,2-dihydroquinoline polymer) manufactured by Sumitomo Chemical Company, Limited

Sulfur: HK-200-5 (powdery sulfur containing 5% of oil) manufactured by Hosoi Chemical Industry Co., Ltd.)

Vulcanization accelerator 1: NOCCELER CZ (CBS, N-cyclohexyl-2-benzothiazolyl sulfenamide) manufactured by Ouchi Shinko Chemical Industrial Co., Ltd.

Vulcanization accelerator 2: NOCCELER M-P (MBT, 2-mercaptobenzothiazole) manufactured by Ouchi Shinko Chemical Industrial Co., Ltd.

Vulcanization accelerator 3: NOCCELER D (DPG, 1,3-diphenylguanidine) manufactured by Ouchi Shinko Chemical Industrial Co., Ltd.

Production Example 1: Synthesis of Liquid Farnesene Rubber

500 mL of hexane, 46 g of THF, and 60 mmol of n-butyllithium (n-BuLi) were added to a 1-L pressure-resistant stainless steel vessel dried and purged with nitrogen, and then a polymerization reaction was carried out while dropping a mixed solution of 100 mL of hexane, 15 g of farnesene, and 285 g of styrene to the reaction vessel over 2 hours. After completion of the dropping, 60 mL of a 2 M isopropanol/hexane solution was dropped to complete the reaction. The reaction solution was air-dried overnight and further dried under reduced pressure for 2 days to obtain 300 g of a liquid farnesene rubber. The polymerization conversion rate was almost 100%.

(Examples and Comparative Examples)

In accordance with each of blending formulas shown in Table 1, the chemicals other than the sulfur and the vulcanization accelerator were kneaded for 1 to 10 minutes by using a 1.7-L sealed Banbury mixer until the discharge temperature reached 150 to 160°C, to obtain a kneaded product. Next, the sulfur and the vulcanization accelerator were added to the obtained kneaded product, and the mixture was kneaded for 4 minutes by using a twin-screw open roll until reaching 105°C, to obtain an unvulcanized rubber composition. A test vulcanized rubber composition was produced by press-vulcanizing the obtained unvulcanized rubber composition at 170°C for 12 minutes.

The unvulcanized rubber composition based on each blending formula shown in Table 1 was extruded into the shape of a tread by using an extruder having a die with a predetermined shape, and was attached together with other tire members to form an unvulcanized tire, and the unvulcanized tire was press-vulcanized at 170°C for 12 minutes, whereby test tires 1 to 6 each having a tire size, a tire cross-section width, and a tire outer diameter shown in Table 2 were produced and prepared.

The obtained test tires were evaluated as described below. The evaluation results are shown in Tables 3 to 6.

<Measurement of tanδ and Complex Elastic Modulus E*>

For each test vulcanized rubber composition (test piece size: length 10 mm, width: 1.7 to 2.0 mm, thickness: 1.4 to 1.5 mm), tanδ was measured under the conditions of a temperature of -30°C, a frequency of 10 Hz, and an elongation strain of 2.5% using a viscoelasticity spectrometer manufactured by Iwamoto Seisakusho. In addition, for each test vulcanized rubber composition, a complex elastic modulus (E*) was measured under the conditions of a temperature of 0°C, a frequency of 10 Hz, and an elongation strain of 2.5%. The results are shown in the cells for "-30°C tanδ" and "0°C E*" in Table 1.

<On-Ice Performance (Grip Performance)>

Each kind of the respective test tires and tires for summer having the same tire size as the test tires was mounted to the four wheels of a front-wheel-drive passenger car having an engine displacement of 2,000 cc, and the time taken until the car stopped after the car was braked when the car was running at a speed of 30 km/h on a test course having an ice road surface, was measured. The results are represented as an index. A higher index indicates that the grip performance on ice is better. The index was obtained by the following formula. As a reference comparative example, Comparative Example 2 is set in Table 3 and Table 4, and Comparative Example 8 is set in Table 5 and Table 6. The test results are shown in Tables 3 to 6.

$$\text{(On-ice performance index)} = \text{(time until stop of tire for summer} - \text{time until stop}$$

$$\text{of each test tire)} / \text{(time until stop of tire for summer} - \text{time until stop of tire of reference}$$

$$\text{comparative example)} \times 100$$

[Table 1]

| | | Blending formula of tread rubber | | | | | | | | | |
|---|---|---|---|---|---|---|---|---|---|---|---|
| | | A | B | C | D | E | F | G | H | I | J |
| Blending amount (parts by mass) | NR | 40 | 35 | 30 | 35 | 50 | 35 | 35 | 50 | 40 | 50 |
| | BR 1 | 24 | - | - | - | 10 | - | - | 10 | 24 | 10 |
| | BR 2 | 36 | 65 | 70 | 65 | 40 | 65 | 65 | 40 | 36 | 40 |
| | Carbon black | 6.0 | 6.0 | 6.0 | 6.0 | 6.0 | 6.0 | 6.0 | 6.0 | 6.0 | 6.0 |
| | Silica 1 | 64 | 63 | 20 | 40 | 70 | 80 | 58 | 63 | 64 | 63 |
| | Silica 2 | - | - | 76 | 30 | - | - | - | - | - | - |
| | Clay | 9.6 | - | - | - | - | - | - | - | 9.6 | - |
| | Silane coupling agent | 5.12 | 5.04 | 6.16 | 5.0 | 5.6 | 6.4 | 4.64 | 5.04 | 5.12 | 5.04 |
| | Oil 1 | 15 | 60 | 12 | 26 | 38 | 25 | 25 | 35 | 35 | 50 |
| | Oil 2 | 6.0 | - | 43 | - | - | 8.0 | 3.0 | - | 6.0 | - |
| | Resin component 1 | 4.25 | - | 22 | 5.0 | 25 | 15 | 15 | 25 | 4.25 | 10 |
| | Resin component 2 | 8.0 | - | - | - | 5.0 | - | - | 5.0 | 8.0 | - |
| | Liquid rubber | 5.76 | - | - | - | - | - | - | - | 6.0 | - |
| | Wax | 1.5 | 1.5 | 1.5 | 1.5 | 1.5 | 1.5 | 1.5 | 1.5 | 1.5 | 1.5 |
| | Processing aid | 2.0 | 1.2 | 1.2 | 1.2 | 1.2 | 1.2 | 1.2 | 1.2 | 2.0 | 1.2 |
| | Stearic acid | 1.5 | 1.5 | 1.5 | 1.5 | 1.5 | 1.5 | 1.5 | 1.5 | 1.5 | 1.5 |
| | Zinc oxide | 2.0 | 1.52 | 1.52 | 1.52 | 1.52 | 1.52 | 1.52 | 1.52 | 2.0 | 1.52 |
| | Antioxidant 1 | 2.0 | 2.0 | 2.0 | 2.0 | 2.0 | 2.0 | 2.0 | 2.0 | 2.0 | 2.0 |
| | Antioxidant 2 | 0.5 | 0.5 | 0.5 | 0.5 | 0.5 | 0.5 | 0.5 | 0.5 | 0.5 | 0.5 |
| | Sulfur | 0.85 | 0.8 | 2.7 | 1.46 | 0.8 | 0.4 | 0.4 | 0.8 | 0.85 | 0.8 |
| | Vulcanization accelerator 1 | 2.0 | 1.95 | 1.95 | 1.95 | 1.95 | 1.95 | 1.95 | 1.95 | 2.0 | 1.95 |
| | Vulcanization accelerator 2 | 0.2 | 2.2 | 2.4 | 2.3 | 2.2 | 2.0 | 2.0 | 2.2 | 0.2 | 2.2 |
| | Vulcanization accelerator 3 | 1.6 | 0.2 | 0.2 | 0.2 | 0.2 | 0.2 | 0.2 | 0.2 | 1.6 | 0.2 |
| -30°C tanδ | | 0.504 | 0.488 | 0.507 | 0.457 | 1.722 | 2.033 | 0.519 | 1.247 | 0.597 | 0.758 |
| 0°C E* (MPa) | | 4.65 | 4.78 | 4.34 | 5.95 | 3.83 | 4.07 | 4.15 | 3.46 | 3.50 | 3.28 |
| -30°C tanδ/0°C E* | | 0.108 | 0.102 | 0.117 | 0.077 | 0.450 | 0.500 | 0.125 | 0.360 | 0.171 | 0.231 |

[Table 2]

| | Tire | | | | | |
|---|---|---|---|---|---|---|
| | 1 | 2 | 3 | 4 | 5 | 6 |
| Tire size | 195/65R15 91H | 125/65R19 | 195/65R17 | 285/45R20 112Y | 225/45R22 | 285/45R22 |
| Tire cross-section width Wt (mm) | 195 | 125 | 195 | 285 | 225 | 285 |
| Tire outer diameter Dt (mm) | 634.5 | 645.1 | 685.3 | 764.5 | 761.3 | 815.3 |

[Table 3]

| | Example | | | | | | | | |
|---|---|---|---|---|---|---|---|---|---|
| | 1 | 2 | 3 | 4 | 5 | 6 | 7 | 8 | 9 |
| Blending formula of tread rubber | Blending formula E | Blending formula F | Blending formula G | Blending formula H | Blending formula I | Blending formula J | Blending formula E | Blending formula H | Blending formula I |
| Tire | Tire 2 | Tire 2 | Tire 2 | Tire 2 | Tire 2 | Tire 2 | Tire 3 | Tire 3 | Tire 3 |
| On-iceperformance (grip performance) | 110 | 105 | 105 | 120 | 113 | 118 | 114 | 124 | 115 |

[Table 4]

| | Comparative Example | | | | | |
|---|---|---|---|---|---|---|
| | 1 | 2 | 3 | 4 | 5 | 6 |
| Blending formula of tread rubber | Blending formula B | Blending formula A | Blending formula B | Blending formula C | Blending formula D | Blending formula B |
| Tire | Tire 1 | Tire 2 | Tire 2 | Tire 2 | Tire 2 | Tire 3 |
| On-ice performance (grip performance) | 96 | 100 | 90 | 96 | 81 | 95 |

[Table 5]

| | Example | | | | | | | | |
|---|---|---|---|---|---|---|---|---|---|
| | 10 | 11 | 12 | 13 | 14 | 15 | 16 | 17 | 18 |
| Blending formula of tread rubber | Blending formula E | Blending formula F | Blending formula G | Blending formula H | Blending formula I | Blending formula J | Blending formula E | Blending formula H | Blending formula I |
| Tire | Tire 5 | Tire 5 | Tire 5 | Tire 5 | Tire 5 | Tire 5 | Tire 6 | Tire 6 | Tire 6 |
| On-ice performance (grip performance) | 111 | 106 | 106 | 120 | 113 | 119 | 115 | 122 | 117 |

[Table 6]

| | Comparative Example | | | | | |
|---|---|---|---|---|---|---|
| | 7 | 8 | 9 | 10 | 11 | 12 |
| Blending formula of tread rubber | Blending formula B | Blending formula A | Blending formula B | Blending formula C | Blending formula D | Blending formula B |
| Tire | Tire 4 | Tire 5 | Tire 5 | Tire 5 | Tire 5 | Tire 6 |
| On-ice performance (grip performance) | 100 | 100 | 94 | 98 | 88 | 100 |

From the results in Tables 1 to 6, it is found that the tire according to the present invention having a cross-section width and an outer diameter that satisfy predetermined requirements and having tread rubber viscoelasticity that is set so as to satisfy a specific condition, has improved on-ice performance.

**Claims**

1. A tire comprising a tread, wherein

   the tread is formed from a rubber composition containing a rubber component,
   a ratio (-30°C tan$\delta$/0°C E*) of tan$\delta$ at -30°C (-30°C tan$\delta$) to a complex elastic modulus (MPa) at 0°C (0°C E*) of the rubber composition is 0.120 to 0.500, and
   when a tire cross-section width and a tire outer diameter in a state where the tire is fitted on a rim and an internal pressure of the tire is not less than 250 kPa are denoted by Wt (mm) and Dt (mm), respectively, Wt and Dt satisfy any of the following expressions (1), (2), and (3),

$$Wt < 225 \text{ and } Dt \geq 59.078 \times Wt \wedge 0.460 \quad (1),$$

$$225 \leq Wt < 235 \text{ and } Dt \geq 59.078 \times Wt \wedge 0.620 - 967.673 \quad (2),$$

$$235 \leq Wt \text{ and } Dt \geq Wt \wedge 0.6 + 750 \quad (3),$$

   wherein tan $\delta$ is measured under the conditions of a temperature of -30°C, a frequency of 10 Hz and an elongation strain of 2.5%, and a complex elastic modulus (E*) is measured under the conditions of a temperature of 0°C, a frequency of 10 Hz and an elongation strain of 2.5%.

2. The tire according to claim 1, wherein the rubber component contains an isoprene-based rubber.

3. The tire according to claim 1 or 2, wherein the rubber component contains a butadiene rubber.

4. The tire according to any one of claims 1 to 3, wherein the rubber composition contains silica.

5. The tire according to any one of claims 1 to 4, wherein the rubber composition contains a resin component.

6. The tire according to any one of claims 1 to 5, wherein the rubber composition contains 40 parts by mass or greater of a softener per 100 parts by mass of the rubber component.

7. The tire according to any one of claims 1 to 6, wherein the rubber composition contains 50 parts by mass or greater of silica having a nitrogen adsorption specific surface area of not less than 140 $m^2$/g, per 100 parts by mass of the rubber component, wherein the nitrogen adsorption specific surface area of the silica is a value measured by the BET method according to ASTM D3037-93.

8. The tire according to any one of claims 1 to 7, wherein the tire is a tire for winter.

**Patentansprüche**

1. Reifen, der einen Laufstreifen umfasst, wobei

der Laufstreifen mit einer Kautschukzusammensetzung gebildet ist, die eine Kautschukkomponente enthält, ein Verhältnis (-30°C tanδ/0°C E*) von tanδ bei -30°C (-30°C tanδ) zu einem komplexen Elastizitätsmodul (MPa) bei 0°C (0°C E*) der Kautschukzusammensetzung 0,120 bis 0,500 beträgt, und
wenn eine Reifenquerschnittsbreite und ein Reifenaußendurchmesser in einem Zustand, worin der Reifen auf eine Felge aufgezogen ist und ein Innendruck des Reifens nicht weniger als 250 kPa beträgt, jeweils durch Wt (mm) und Dt (mm) bezeichnet sind, Wt und Dt einen beliebigen der folgenden Ausdrücke (1), (2) und (3) erfüllen,

$$\text{Wt} < 225 \text{ und Dt} \geq 59{,}078 \times \text{Wt}^{\wedge}0{,}460 \quad (1),$$

$$225 \leq \text{Wt} < 235 \text{ und Dt} \geq 59{,}078 \times \text{Wt}^{\wedge}0{,}620 - 967{,}673 \quad (2),$$

$$235 \leq \text{Wt und Dt} \geq \text{Wt}^{\wedge}0{,}6 + 750 \quad (3),$$

wobei tanδ unter den Bedingungen einer Temperatur von -30°C, einer Frequenz von 10 Hz und einer Dehnungsverformung von 2,5% gemessen ist, und ein komplexer Elastizitätsmodul (E*) unter den Bedingungen einer Temperatur von 0°C, einer Frequenz von 10 Hz und einer Dehnungsverformung von 2,5% gemessen ist.

2. Reifen nach Anspruch 1, wobei die Kautschukkomponente einen Isoprenbasierten Kautschuk enthält.

3. Reifen nach Anspruch 1 oder 2, wobei die Kautschukkomponente einen Butadienkautschuk enthält.

4. Reifen nach einem der Ansprüche 1 bis 3, wobei die Kautschukzusammensetzung Siliciumdioxid enthält.

5. Reifen nach einem der Ansprüche 1 bis 4, wobei die Kautschukzusammensetzung eine Harzkomponente enthält.

6. Reifen nach einem der Ansprüche 1 bis 5, wobei die Kautschukzusammensetzung 40 Massenteile oder mehr eines Weichmachers pro 100 Massenteile der Kautschukkomponente enthält.

7. Reifen nach einem der Ansprüche 1 bis 6, wobei die Kautschukzusammensetzung 50 Massenteile oder mehr an Siliciumdioxid mit einer spezifischen Stickstoffadsorptionsoberfläche von nicht weniger als 140 m$^2$/g pro 100 Massenteile der Kautschukkomponente enthält, wobei die spezifische Stickstoffadsorptionsoberfläche des Siliciumdioxids ein durch das BET-Verfahren gemäß ASTM D3037-93 gemessener Wert ist.

8. Reifen nach einem der Ansprüche 1 bis 7, wobei der Reifen ein Reifen für den Winter ist.

**Revendications**

1. Pneu comprenant une bande de roulement, dans lequel

la bande de roulement est formée à partir d'une composition de caoutchouc contenant un composant de caoutchouc,
un ratio (-30 °C, tan δ/0 °C E*) de la tan δ à -30 °C (-30 °C, tan δ) sur un module élastique complexe (MPa) à 0 °C (0 °C, E*) de la composition de caoutchouc est égal à 0,120 à 0,500, et
lorsqu'une largeur de section transversale de pneu et qu'un diamètre extérieur de pneu dans un état où le pneu est ajusté sur une jante et qu'une pression interne du pneu n'est pas inférieure à 250 kPa, sont désignés par Wt (mm) et Dt (mm), respectivement, Wt et Dt satisfont l'une quelconque des relations suivantes (1), (2), et (3),

$$Wt < 225 \text{ et } Dt \geq 59{,}078 \times Wt \wedge 0{,}460 \qquad (1),$$

$$225 \leq Wt < 235 \text{ et } Dt \geq 59{,}078 \times Wt \wedge 0{,}620 - 967{,}673 \qquad (2),$$

$$235 \leq Wt \text{ et } Dt \geq Wt \wedge 0{,}6 + 750 \qquad (3),$$

où tan $\delta$ est mesurée dans les conditions d'une température de -30 °C, d'une fréquence de 10 Hz et d'une contrainte d'élongation de 2,5 %, et un module élastique complexe (E*) est mesuré dans les conditions d'une température de 0 °C, d'une fréquence de 10 Hz et d'une contrainte d'élongation de 2,5 %.

2. Pneu selon la revendication 1, dans lequel le composant de caoutchouc contient un caoutchouc à base d'isoprène.

3. Pneu selon la revendication 1 ou la revendication 2, dans lequel le composant de caoutchouc contient un caoutchouc butadiène.

4. Pneu selon l'une quelconque des revendications 1 à 3, dans lequel la composition de caoutchouc contient de la silice.

5. Pneu selon l'une quelconque des revendications 1 à 4, dans lequel la composition de caoutchouc contient un composant de résine.

6. Pneu selon l'une quelconque des revendications 1 à 5, dans lequel la composition de caoutchouc contient 40 parties en masse ou plus de plastifiant pour 100 parties en masse du composant de caoutchouc.

7. Pneu selon l'une quelconque des revendications 1 à 6, dans lequel la composition de caoutchouc contient 50 parties en masse ou plus de silice ayant une surface spécifique par adsorption d'azote non inférieure à 140 $m^2/g$, pour 100 parties en masse de composant de caoutchouc,
dans lequel la surface spécifique par adsorption d'azote de la silice est une valeur mesurée par la méthode de BET selon la norme ASTM D3037-93.

8. Pneu selon l'une quelconque des revendications 1 à 7, lequel pneu étant un pneu pour l'hiver.

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2012176476 A
- US 20170197465 A1
- CN 104130465 A
- EP 3406664 A1
- EP 3000616 A1